# FASCICULE DE BREVET EUROPEEN

(11) **EP 2 077 377 B1**
(45) Date de publication et mention de la délivrance du brevet: **09.02.2011**
(21) Numéro de dépôt: 08172055.9
(22) Date de dépôt: 18.12.2008
(51) Int. Cl.: F01N 3/025, F01N 3/029, F01N 3/20, F01N 3/36, F02B 37/00

(54) **Circuit de gaz d'échappement d'un moteur à combustion interne**
Exhaust gas circuit of an internal combustion engine
Abgasstrang eines Verbrennungsmotors

(30) Priorité: 02.01.2008 FR 0850011
(43) Date de publication de la demande: 08.07.2009
(73) Titulaire: PEUGEOT CITROËN AUTOMOBILES S.A., 78140 Vélizy Villacoublay (FR)
(72) Inventeur: Perrard, William, 78770 Andelu (FR)

(56) Documents cités:
- WO-A-2005/073530
- DE-A1- 10 228 660
- US-A1- 2004 194 447

## Description

L'invention a trait au domaine de la dépollution des gaz d'échappement d'un moteur à combustion interne suralimenté. Un moteur à combustion interne produit lors de son fonctionnement des gaz d'échappement issus de la combustion du carburant. A défaut de pouvoir calibrer le moteur afin qu'il ne rejette qu'une quantité de polluants réglementés admissible, les gaz d'échappement doivent subir un traitement afin de réduire les polluants réglementés à un niveau inférieur aux seuils normalisés.

Le moyen de traitement des gaz est généralement situé dans le circuit d'échappement du moteur. On parle alors de post-traitement des gaz.

Ce moyen de traitement est situé en aval de la turbine du turbocompresseur, afin d'optimiser la récupération d'énergie à l'échappement par la turbine 3. Ce moyen de traitement peut être constitué d'un ou plusieurs éléments, à savoir, de façon non exhaustive, un ou plusieurs catalyseurs d'oxydation, un moyen de réduction des oxydes d'azotes (catalyseur dit « deNox », catalyseur SCR ou piège à NOx), un filtre à particules.

Certains moyens de post-traitement nécessitent l'ajout dans le circuit d'échappement d'un élément extérieur pour leur bon fonctionnement, et ce de façon ponctuelle ou en continu. Par exemple, un catalyseur SCR nécessite l'ajout en continu d'un agent réducteur, généralement un liquide à base d'urée, afin de réduire les oxydes d'azote.

Typiquement, un filtre à particule nécessite d'être périodiquement régénéré, c'est-à-dire vidé des particules filtrées par oxydation de ces dernières. Une température de 450°C à 700°C est nécessaire pour effectuer l'oxydation des particules qui permet de les détruire. L'introduction d'un fluide dans le circuit d'échappement peut être un moyen d'atteindre cette température. Cette introduction est réalisée par un moyen d'introduction, pouvant comporter par exemple un injecteur similaire aux injecteurs classiquement utilisés pour l'injection de carburant des moteurs à combustion interne, ou encore un dispositif permettant l'introduction du fluide sous forme de vapeur.

Le fluide introduit dans le circuit peut donc être, de manière non restrictive et selon les applications, un carburant - notamment du gazole - , un biocarburant, un réducteur à base d'urée, du glycérol, de l'alcool, de l'eau, un composé à base de réducteur métallique comme le fer, le cuivre ou le zinc, de l'hydrogène, du monoxyde de carbone, tout mélange de ces composés, ou tout autre composé ayant un rôle de réducteur dans le moyen de traitement des gaz d'échappement.

Typiquement, le moyen de dépollution peut donc comporter un filtre à particules destiné à piéger les particules issues de la combustion. Dans ce cas le fluide introduit peut être un additif destiné à abaisser la température de combustion des particules lors des phases de régénération du filtre, ou un carburant tel que du gazole destiné à favoriser l'atteinte de la température d'oxydation des particules en générant une réaction exothermique dans un catalyseur placé en amont du filtre à particules ou dans le filtre à particule lui-même.

L'obtention de cette température d'oxydation est une difficulté majeure dans l'utilisation d'un filtre à particule. Typiquement, la température des gaz d'échappement au ralenti d'un moteur Diesel comportant un turbocompresseur est de l'ordre de 150°C en sortie de turbine. Classiquement le complément d'énergie à apporter à l'échappement lors des phases de régénération du filtre est fourni par une dégradation de la combustion et peut être secondé par utilisation de la post injection, c'est-à-dire l'injection de carburant dans la chambre de combustion à la fin du cycle de combustion, voire en fin de détente ou en début de phase d'échappement. Dans le cas de l'utilisation de la post-injection, celle-ci peut brûler totalement ou partiellement dans le moteur, générant ainsi une élévation de la température des gaz d'échappement ou entraînant une augmentation des émissions de monoxyde de carbone et d'hydrocarbures imbrûlés à l'échappement qui vont s'oxyder sur le catalyseur d'oxydation, créant ainsi une augmentation de chaleur.

Cette approche entraîne nécessairement une augmentation de la sollicitation thermique de composants du moteur tels que le collecteur d'échappement et le turbocompresseur. Par ailleurs, la dégradation de la combustion et le recours à la post injection entraînent une augmentation de la dilution du gazole dans l'huile du circuit de lubrification du moteur, ce qui impose des vidanges plus fréquentes afin d'éviter l'endommagement du moteur.

L'un des moyens de résoudre ces problèmes est d'utiliser une technique dite d'injection de gazole à l'échappement. Selon cette technique, du gazole, ou éventuellement un autre hydrocarbure, est introduit directement dans le circuit des gaz d'échappement afin de solliciter le catalyseur d'oxydation pour élever la température des gaz d'échappement par création d'une réaction exothermique.

L'inventeur a constaté qu'une mauvaise distribution de la concentration en carburant sur la face d'entrée du catalyseur peut localement conduire à des niveaux thermiques trop élevés au sein de celui-ci et entraîner sa dégradation. Le carburant doit donc être uniformément distribué sur la surface d'entrée du catalyseur.

Dans une application automobile classique, une homogénéité satisfaisante est généralement atteinte sans moyen spécifique dès que le catalyseur est positionné à plus de quarante centimètres en aval du point d'introduction de carburant. Il n'est cependant pas possible d'utiliser cette configuration de circuit d'échappement sur tous les véhicules, d'autant que l'éloignement du catalyseur du moteur s'oppose à sa montée rapide en température, et donc à son bon fonctionnement.

Cette problématique d'homogénéité du mélange à l'entrée du catalyseur d'oxydation est transposable à de nombreux autres systèmes de post-traitement. Par exemple, pour la désulfuration des systèmes de captation des oxydes d'azote. Pour d'autres systèmes, ce n'est pas la fiabilité qui est en jeu, mais l'efficacité de la conversion des polluants. Par exemple, dans le cadre de systèmes de réduction catalytique sélective des oxydes d'azote, la bonne homogénéité de l'agent réducteur dans les gaz d'échappement à l'entrée du système permet une meilleure efficacité.

Le document DE10228660 présente un circuit des gaz d'échappement d'un moteur à combustion, comportant une turbine, un moyen d'introduction de fluide pour la réduction catalytique sélective des oxydes d'azote, et un catalyseur de réduction catalytique sélective des oxydes d'azote, l'introduction du fluide étant réalisée entre la turbine et le catalyseur.

Le brevet EP1515013 de Toyota présente une architecture qui consiste à intégrer l'injecteur de réducteur à l'échappement dans la culasse en aval d'une des soupapes d'échappement et en amont du turbocompresseur. Le passage du réducteur injecté dans la culasse au travers de la turbine du turbocompresseur garantit de fait un mélange homogène du gazole avec les gaz d'échappement, mais cette solution est très structurante vis à vis de la conception de la culasse et peut en outre entrainer des risques de dépôts importants au niveau de la turbine pouvant en altérer le fonctionnement.

La demande de brevet US2004194447 nous enseigne par ailleurs qu'il peut être fait usage de la chambre de sortie du carter d'un turbocompresseur comme de chambre de mélange et de combustion d'un brûleur à carburant, destiné à chauffer les gaz d'échappement d'un moteur. Ceci est notamment possible car le carter d'un turbocompresseur est, de par sa conception, apte à supporter des températures importantes.

L'invention vise donc à trouver une solution permettant de positionner le moyen de post-traitement des gaz d'échappement à proximité du moteur, tout en assurant une fiabilité ou une efficacité satisfaisante grâce à une bonne homogénéité entre les gaz d'échappement et le réducteur introduit en amont du système de post-traitement.

Dans l'invention, la solution à ces problèmes consiste à introduite le réducteur dans les turbulences générées en aval de la turbine du turbocompresseur.

Plus précisément, l'invention porte sur un circuit de traitement et d'évacuation des gaz d'échappement d'un moteur à combustion interne comprenant au moins une turbine disposée dans un carter, un moyen de traitement des gaz, un moyen d'introduction de fluide en un point d'introduction en amont du moyen de traitement des gaz, caractérisé en ce que le point d'introduction de fluide dans le circuit est situé dans les turbulences générées par ladite turbine en aval du carter. Ainsi, le mélange du fluide sera-t-il favorisé par les turbulences générées par la turbine. Le mélange profitera également du phénomène de diffusion du fluide introduit lors du transport des gaz d'échappement entre leur point d'introduction et l'entrée du moyen de traitement des gaz.

Avec un point d'introduction en aval de la sortie du carter de la turbine, la fabrication est simple, le tube d'un conduit d'échappement étant généralement constitué de tôle emboutie, facilement usinable. En outre, les températures et les pressions sont légèrement inférieures à celles rencontrées en amont, et notamment dans le carter de la turbine, ce qui permet au moyen d'introduction étant implanté en aval de la sortie du carter de subir des contraintes moindres.

Enfin, en introduisant dans le carter du turbocompresseur un fluide, et notamment du gazole, on peut entrainer à terme un encrassement de la turbine préjudiciable à son bon fonctionnement voire à son intégrité. Lorsque la face d'entrée du moyen de traitement des gaz est distante de soixante centimètres au plus de la sortie de la turbine, l'invention propose que le point d'introduction de fluide dans le circuit soit situé au plus au tiers de la distance séparant la sortie de la turbine et la face d'entrée du moyen de traitement des gaz.

Dans le cas du traitement des gaz d'échappement d'un moteur à combustion interne équipant un véhicule automobile, le point d'introduction de fluide dans le circuit sera situé au plus à vingt centimètres de la sortie de la turbine du turbocompresseur.

Selon l'invention, le moyen d'introduction de fluide dans le circuit d'échappement des gaz peut comporter un injecteur, par exemple du type classiquement utilisé pour l'injection de carburant dans les moteurs à combustion interne automobiles. Il peut également comporter un dispositif de vaporisation du fluide.

Dans l'une des variantes de l'invention, le moyen de traitement des gaz comporte au moins un filtre à particules.

Dans une autre variante de l'invention, le moyen de traitement des gaz comporte un catalyseur de type SCR et le fluide injecté comporte l'agent réducteur de la SCR.

Dans une autre variante de l'invention le moyen de traitement des gaz comporte au moins un piège à oxydes d'azote.

Le fluide introduit dans le circuit de traitement et d'évacuation des gaz d'échappement peut comporter au moins un carburant, biocarburant, ou tout mélange de carburant et biocarburant, y compris du gazole. Le fluide introduit peut également comporter du glycérol, de l'alcool, de l'eau, un composé à base de réducteur métallique comme le fer, le cuivre ou le zinc, de l'hydrogène, du monoxyde de carbone ou tout autre fluide ayant un rôle de réducteur dans le moyen de traitement des gaz.

Par leur mouvement de rotation, les aubes de la turbine du turbocompresseur génèrent des turbulences dans la ligne d'échappement, en aval du turbocompresseur. L'intensité de ces turbulences et la distance sur laquelle elles persistent dans le circuit dépendent de nombreux paramètres, parmi lesquels figurent la géométrie des aubes de la turbine, la vitesse de rotation du turbocompresseur, la géométrie de la ligne d'échappement.

Dans le cas particulier d'une application automobile Diesel équipée d'un système de post-traitement comportant un filtre à particules régénéré en introduisant du carburant dans le circuit des gaz d'échappement, l'inventeur a constaté qu'il convient d'injecter le carburant dans une zone située dans les vingt centimètres suivant la turbine afin de profiter de l'effet de mélange procuré par les turbulences.

Le carburant injecté dans cette zone par un dispositif pouvant être un injecteur Diesel classique est ainsi mélangé aux gaz d'échappement pour créer un mélange homogène sous l'effet des turbulences générées par la turbine dans le flux des gaz d'échappement.

Un conduit d'échappement ayant une telle disposition présente de nombreux avantages vis-à-vis des lignes d'échappement connues dans l'art antérieur. Tout d'abord, puisque l'usage de la post-injection est réduit, voire supprimé, les problèmes de dilutions de l'huile moteur par du carburant sont limités. Par ailleurs, le carburant nécessaire à la production de l'exotherme pour la régénération du filtre à particule étant introduit en aval de la turbine du turbocompresseur, ce dernier ne peut être dégradé par des dépôts notamment d'hydrocarbures issus de cette introduction. Enfin, un mélange homogène entre le carburant et les gaz d'échappement étant assuré par les turbulences dans lesquelles le carburant est injecté, il est possible de positionner le catalyseur d'oxydation très proche de la sortie turbocompresseur, c'est-à-dire de la sortie de son carter, soit typiquement à moins de quarante centimètres en aval le long de la ligne d'échappement. L'invention est décrite plus en détail ci-après et en référence aux figures représentant schématiquement le système dans son mode de réalisation préférentiel.
La figure 1 représente schématiquement un conduit d'échappement conforme à la présente invention.
La figure 2 représente schématiquement un conduit d'échappement conforme à la présente invention, dans le cas de l'application à un moyen de post-traitement comportant un filtre à particules.
La figure 3 présente la répartition du carburant sur la face d'entrée du catalyseur d'oxydation sur une application donnée, dans le cas où le carburant est introduit dans de faibles turbulences
La figure 4 présente la répartition du carburant sur la face d'entrée du catalyseur d'oxydation sur la même application que celle de la figure 2, dans le cas où le carburant est introduit dans de fortes turbulences.

La présente invention s'applique au circuit d'évacuation et de traitement des gaz d'échappement d'un moteur à combustion interne 1, présentant un turbocompresseur dont le compresseur 4 est actionné par une turbine 3 située à l'échappement 2 du moteur 1. Ce circuit comporte un moyen de post-traitement 6, nécessitant l'introduction périodique ou en continu d'un agent réducteur en amont dudit moyen de post-traitement 6. Le fluide est introduit par un moyen d'introduction 5.

Que ce soit pour des raisons d'efficacité ou de fiabilité, selon les moyens de traitement mis en jeu, il est important que le fluide introduit dans les gaz d'échappement y soit mélangé de la façon la plus homogène possible lors de son arrivée sur la face d'entrée 7 du moyen de traitement 6.

Ce mélange peut se faire sans moyen spécifique, et, dans le cadre des applications automobiles, il est admis que le mélange sera suffisamment homogène dans le flux des gaz d'échappement environ quarante centimètres après le point d'injection de fluide, du fait de la diffusion du fluide dans les gaz d'échappement. Cependant, il est parfois impossible de garantir une distance L₁ entre le point d'injection 10 et l'entrée du moyen de traitement 6 suffisante pour assurer cette homogénéité du mélange, c'est-à-dire une distance L₁ supérieure à quarante centimètres pour une application automobile classique.

Pour cela, il est proposé dans l'invention d'introduire le fluide dans les turbulences générées par la turbine 3 du turbocompresseur, en aval de celle-ci. En effet, la rotation de la turbine 3 lors du fonctionnement du moteur 1 crée des turbulences qui persistent en aval de celle-ci, turbulences qui sont favorables au mélange du fluide introduit par le moyen d'introduction 5. Il est donc particulièrement avantageux d'introduire le fluide au plus près de la turbine 3. Ainsi, les turbulences subies par le mélange seront les plus importantes possibles, et le point d'introduction 10 sera le plus éloigné possible de la face d'entrée 7 du moyen de traitement des gaz 6. A titre d'exemple, dans une application automobile à moteur Diesel classique, le point d'injection de fluide 10 doit se situer à une distance L₂ de la sortie de la turbine 3 égale au maximum à vingt centimètres pour profiter suffisamment des turbulences générées par la turbine 3, afin que lesdites turbulences complètent de façon efficace la diffusion naturelle du fluide dans les gaz d'échappement entre lors de leur transport entre le point d'introduction 10 du fluide et la face d'entrée 7 du moyen de traitement des gaz 6.

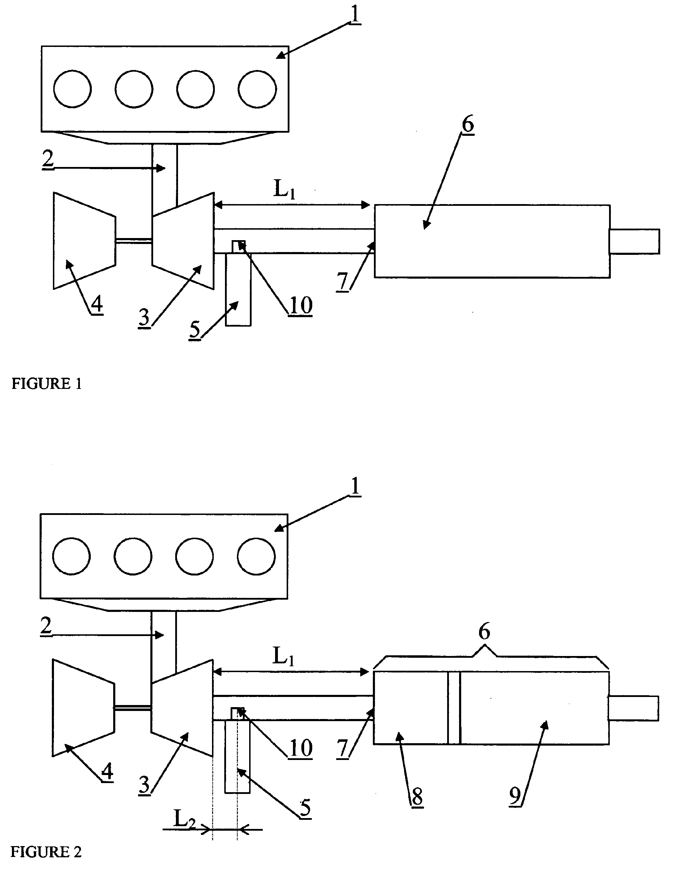

La figure 2 présente un circuit assez typique d'une application automobile à moteur Diesel, comportant successivement le long du circuit des gaz d'échappement la turbine 3 d'un turbocompresseur, et un moyen de post-traitement 6 comportant au moins un catalyseur d'oxydation 8 suivi d'un filtre à particules 9.

Les moteurs à combustion interne automobiles, et particulièrement les moteurs de type Diesel produisent lors de leur fonctionnement des particules. Les émissions de particules sont réglementées. Le respect des normes d'émissions polluantes peut nécessiter l'emploi d'un filtre à particules 9. Une fois piégées par le filtre, les particules doivent être périodiquement détruites par une élévation de la température dans le filtre. Une température de 450°C à 700°C est nécessaire pour effectuer l'oxydation des particules qui permet de les détruire.

C'est dans ce cadre que la présente invention trouve son application préférentielle.

Le fluide introduit par le moyen d'introduction 5 est alors préférentiellement du gazole. Le moyen d'introduction 5 peut alors être constitué d'un injecteur, ou d'un dispositif de vaporisation du gazole. Le gazole est introduit pendant les phases de régénération du filtre à particules 9. Le gazole réagit de façon exothermique sur le catalyseur d'oxydation 8. Cette réaction exothermique permet l'échauffement des gaz d'échappement entrainant la destruction par oxydation des particules dans le filtre à particules 9. Cependant, si le mélange entre les gaz d'échappement et le gazole pulvérisé n'est pas suffisamment homogène lors de son arrivée sur la face d'entrée 7 du catalyseur d'oxydation 8, cela peut entrainer localement des niveaux de température trop élevés, et endommager le catalyseur. Le positionnement de l'injecteur 5', ou plus précisément du point d'injection 10, dans une zone où persistent les turbulences générées par la turbine du catalyseur permet d'assurer un mélange homogène à l'entrée 7 du catalyseur d'oxydation 8, évitant ainsi sa dégradation prématurée. Classiquement, le point d'injection 10 de fluide doit se situer à une distance L₂ de la sortie de la turbine 3 égale au maximum à vingt centimètres afin que lesdites turbulences complètent de façon efficace la diffusion naturelle du gazole dans les gaz d'échappement entre lors de leur transport entre le point d'injection 10 et la face d'entrée 7 du catalyseur d'oxydation 8.

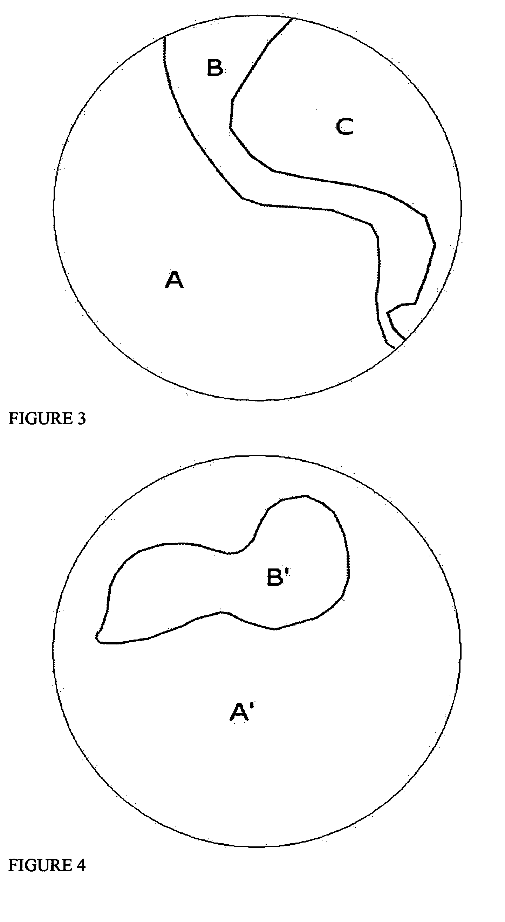

Les figures 3 et 4 représentent schématiquement la répartition du gazole introduit, à son arrivée sur la face d'entrée 7 catalyseur d'oxydation, dans un circuit d'échappement tel que présenté sur la figure 2. Il s'agit des résultats d'une simulation numérique mettant en jeu un catalyseur de 5,66 pouces de diamètre, avec une injection d'une même quantité gazole à quinze centimètres de la face d'entrée 7 du catalyseur, dans un conduit d'échappement ayant une géométrie représentative d'une application automobile Diesel munie d'un moteur de 1,6L de cylindrée. Tous les paramètres de ces deux simulations sont égaux, à l'exception du niveau de turbulence subit par le gazole à son introduction. Ce niveau de turbulences est faible dans le cas de la figure 3, et fort dans le cas de la figure 4. Par souci de clarté, la répartition du carburant est définie en trois zones. La zone A (respectivement A') de forte concentration en gazole, la zone B (respectivement B') de concentration moyenne, et la zone C de faible concentration.

La figure 3 montre que les zone de moyenne ou faible concentration, c'est à dire les zones B et C couvrent près de moitié de la surface de la face d'entrée 7 du catalyseur d'oxydation, traduisant un mauvais mélange du gazole injecté dans le circuit. Le seul phénomène de diffusion, réduit par un temps et une distance de transport limités entre le point d'introduction du gazole et face d'entrée 7 du catalyseur d'oxydation est ici insuffisant pour garantir un mélange homogène.

La figure 4 ne montre aucune zone de faible concentration, et seul un quart environ de la surface de la face d'entrée 7 du catalyseur d'oxydation présente une zone de concentration moyenne B'.

La seule différence entre les deux simulations étant le niveau de turbulence au niveau de l'introduction du gazole, ces simulations montrent la sensibilité de l'homogénéité du mélange à ce paramètre.

L'invention ainsi décrite permet l'obtention d'un mélange homogène entre les gaz d'échappement d'un moteur à combustion et un fluide introduit dans ces gaz. Son application préférentielle est l'introduction de gazole pulvérisé dans une ligne d'échappement d'automobile à moteur Diesel suralimenté afin de produire l'exotherme nécessaire à la régénération d'un filtre à particules. Cependant, elle est également avantageusement applicable à de nombreux autres moyens de traitement des gaz d'échappement de moteur, pour des raisons de fiabilité ou d'efficacité de la dépollution. Citons par exemple, de manière non restrictive, la catalyse SCR (réduction catalytique sélective), ou les pièges à oxydes d'azote (NOx). De même, cette technologie peut s'appliquer à de nombreuses technologies de filtres à particules, qu'ils soient catalysés ou nécessitant un additif, et quelle que soit la composition de leur substrat : carbure de silicium, cordiérite, mulite, etc.

## Revendications

1. Circuit de traitement et d'évacuation des gaz d'échappement d'un moteur à combustion interne (1) comprenant au moins une turbine (3) de turbocompresseur, un moyen de traitement des gaz (6), un moyen d'introduction de fluide (5) positionné entre la turbine (3) et le moyen de traitement des gaz (6), **caractérisé en ce que** le point d'introduction (10) de fluide dans le circuit est situé dans les turbulences générées par ladite turbine (3) et **en ce que** la face d'entrée (7) du moyen de traitement des gaz (6) est distante de soixante centimètres au plus de la sortie de la turbine (3), et que le point d'introduction (10) de fluide dans le circuit est situé au plus au tiers de la distance séparant la sortie de la turbine (3) et la face d'entrée (7) du moyen de traitement des gaz (6).

2. Circuit de traitement et d'évacuation des gaz d'échappement d'un moteur à combustion interne (1) équipant un véhicule automobile selon la revendication 1 **caractérisé en ce que** le point d'introduction (10) de fluide dans le circuit est situé au plus à vingt centimètres de la sortie de la turbine (3) du turbocompresseur.

3. Circuit de traitement et d'évacuation des gaz d'échappement d'un moteur à combustion interne (1) selon l'une quelconque des revendications précédentes **caractérisé en ce que** le point d'introduction (10) de fluide dans le circuit est situé dans le carter de la turbine (3) du turbocompresseur.

4. Circuit de traitement et d'évacuation des gaz d'échappement d'un moteur à combustion interne (1) selon l'une quelconque des revendications précédentes **caractérisé en ce que** le moyen d'introduction de fluide (5) est un injecteur.

5. Circuit de traitement et d'évacuation des gaz d'échappement d'un moteur à combustion interne (1) selon l'une quelconque des revendications 1 à 3 **caractérisé en ce que** le moyen d'introduction de fluide (5) comporte un dispositif de vaporisation du fluide.

6. Circuit de traitement et d'évacuation des gaz d'échappement d'un moteur à combustion interne (1) selon l'une quelconque des revendications précédentes **caractérisé en ce que** le moyen de traitement des gaz (6) comporte au moins un filtre à particules (9).

7. Circuit de traitement et d'évacuation des gaz d'échappement d'un moteur à combustion interne (1) selon l'une quelconque des revendications précédente **caractérisé en ce que** le moyen de traitement des gaz (6) comporte au moins un catalyseur de type SCR et le fluide injecté comporte l'agent réducteur de la SCR.

8. Circuit de traitement et d'évacuation des gaz d'échappement d'un moteur à combustion (1) interne selon l'une quelconque des revendications précédente **caractérisé en ce que** le moyen de traitement des gaz (6) comporte au moins un piège à oxydes d'azote.

9. Circuit de traitement et d'évacuation des gaz d'échappement d'un moteur à combustion interne (1) selon l'une quelconque des revendications précédentes **caractérisé en ce que** le fluide introduit comporte au moins un carburant, biocarburant, du glycérol, de l'alcool, de l'eau, un composé à base de réducteur métallique comme le fer, le cuivre ou le zinc, de l'hydrogène, du monoxyde de carbone, tout mélange de ces composés, ou tout autre fluide ayant un rôle de réducteur dans le moyen de traitement des gaz (6).

10. Circuit de traitement et d'évacuation des gaz d'échappement d'un moteur à combustion interne (1) selon l'une quelconque des revendications précédentes **caractérisé en ce que** le fluide introduit comporte du gazole.

## Claims

1. A circuit for the treatment and evacuation of the exhaust gases of an internal combustion engine (1) comprising at least one turbocompressor turbine (3), a gas treatment means (6), a fluid-introducing means (5) positioned between the turbine (3) and the gas treatment means (6), **characterized in that** the introduction point (10) of fluid in the circuit is situated in the turbulences generated by the said turbine (3) and **in that** the inlet face (7) of the gas treatment means (6) is distant by at most sixty centimetres from the outlet of the turbine (3), and that the introduction point (10) of fluid in the circuit is situated at most at one third of the distance separating the outlet the outlet of the turbine (3) and the inlet face (7) of the gas treatment means (6).

2. The circuit for the treatment and evacuation of the exhaust gases of an internal combustion engine (1) equipping a motor vehicle according to Claim 1, **characterized in that** the introduction point (10) of fluid in the circuit is situated at most at twenty centimetres from the outlet of the turbine (3) of the turbocompressor.

3. The circuit for the treatment and evacuation of the exhaust gases of an internal combustion engine (1) according to any one of the preceding claims, **characterized in that** the point of introduction (10) of fluid in the circuit is situated in the casing of the turbine (3) of the turbocompressor.

4. The circuit for the treatment and evacuation of the exhaust gases of an internal combustion engine (1) according to any one of the preceding claims, **characterized in that** the fluid-introducing means (5) is an injector.

5. The circuit for the treatment and evacuation of the exhaust gases of an internal combustion engine (1) according to any one of Claims 1 to 3, **characterized in that** the fluid-introducing means (5) comprises a device for vaporization of the fluid.

6. The circuit for the treatment and evacuation of the exhaust gases of an internal combustion engine (1) according to any one of the preceding claims, **characterized in that** the gas treatment means (6) comprises at least one particle filter (9).

7. The circuit for the treatment and evacuation of the exhaust gases of an internal combustion engine (1) according to any one of the preceding claims, **characterized in that** the gas treatment means (6) comprises at least one catalyzer of the SCR type and the injected fluid comprises the SCR reducing agent.

8. The circuit for the treatment and evacuation of the exhaust gases of an internal combustion engine (1) according to any one of the preceding claims, **characterized in that** the gas treatment means (6) comprises at least one nitrogen oxide trap.

9. The circuit for the treatment and evacuation of the exhaust gases of an internal combustion engine (1) according to any one of the preceding claims, **characterized in that** the fluid which is introduced comprises at least a fuel, biofuel, glycerol, alcohol, water, a compound based on metallic reducer such as iron, copper or zinc, hydrogen, carbon monoxide, any mixture of these components or any other fluid having a role of reducer in the gas treatment means (6).

10. The circuit for the treatment and evacuation of the exhaust gases of an internal combustion engine (1) according to any one of the preceding claims, **characterized in that** the fluid which is introduced comprises diesel.

## Patentansprüche

1. Behandlungs- und Ableitungskreislauf der Abgase eines Verbrennungsmotors (1), der mindestens eine Turbolader-Verdichterturbine (3), ein Mittel zum Behandeln der Gase (6), ein Mittel zum Einführen von Fluid (5), das zwischen der Turbine (3) und dem Mittel zum Behandeln der Gase (6) positioniert ist, aufweist, **dadurch gekennzeichnet, dass** die Einführungsstelle (10) von Fluid in den Kreislauf in den Turbulenzen liegt, die von der Turbine (3) erzeugt werden, und dass die Eingangsseite (7) des Mittels zum Behandeln der Gase (6) maximal sechzig Zentimeter von dem Ausgang der Turbine (3) liegt, und dass die Einführungsstelle (10) des Fluids in den Kreislauf maximal am Drittel der Entfernung, die den Ausgang der Turbine (3) und die Eingangsseite (7) des Mittels zum Behandeln der Gase (6) trennt, liegt.

2. Behandlungs- und Ableitungskreislauf der Abgase eines Verbrennungsmotors (1), der ein Kraftfahrzeug nach Anspruch 1 ausrüstet, **dadurch gekennzeichnet, dass** die Einführungsstelle (10) von Fluid in den Kreislauf maximal zwanzig Zentimeter von dem Ausgang der Verdichterturbine (3) des Turboladers liegt.

3. Behandlungs- und Ableitungskreislauf der Abgase eines Verbrennungsmotors (1) nach einem der vorhergehenden Ansprüche, **dadurch gekennzeichnet, dass** die Einführungsstelle (10) von Fluid in den Kreislauf in der Verkleidung der Turbine (3) des Verdichters liegt.

4. Behandlungs- und Ableitungskreislauf der Abgase eines Verbrennungsmotors (1) nach einem der vorhergehenden Ansprüche, **dadurch gekennzeichnet, dass** das Mittel zum Einführen von Fluid (5) eine Einspritzdüse ist.

5. Behandlungs- und Ableitungskreislauf der Abgase eines Verbrennungsmotors (1) nach einem der Ansprüche 1 bis 3, **dadurch gekennzeichnet, dass** das Mittel zum Einführen von Fluid (5) eine Vorrichtung zum Zerstäuben des Fluids aufweist.

6. Behandlungs- und Ableitungskreislauf der Abgase eines Verbrennungsmotors (1) nach einem der vorhergehenden Ansprüche, **dadurch gekennzeichnet, dass** das Mittel zum Aufbereiten der Gase (6) mindestens ein Partikelfilter (9) aufweist.

7. Behandlungs- und Ableitungskreislauf der Abgase eines Verbrennungsmotors (1) nach einem der vorhergehenden Ansprüche, **dadurch gekennzeichnet, dass** das Mittel zum Aufbereiten der Gase (6) mindestens einen Katalysator des Typs SCR aufweist, und dass das eingespritzte Fluid ein Mittel zum Reduzieren der SCR enthält.

8. Behandlungs- und Ableitungskreislauf der Abgase eines Verbrennungsmotors (1) nach einem der vorhergehenden Ansprüche, **dadurch gekennzeichnet, dass** das Mittel zum Aufbereiten der Gase (6) mindestens eine Stickstoffoxidfalle aufweist.

9. Behandlungs- und Ableitungskreislauf der Abgase eines Verbrennungsmotors (1) nach einem der vorhergehenden Ansprüche, **dadurch gekennzeichnet, dass** das eingeführte Fluid mindestens einen Kraftstoff, Biokraftstoff, Glyzerol, Alkohol, Wasser, eine Verbindung auf der Grundlage von metallischem Reduktionsmittel, wie zum Beispiel Eisen, Kupfer oder Zink, Wasserstoff, Kohlenmonoxid, jedes Gemisch dieser Verbindungen oder jedes andere Fluid enthält, das in dem Mittel zum Behandeln der Gase (6) eine reduzierende Aufgabe erfüllt.

10. Behandlungs- und Ableitungskreislauf der Abgase eines Verbrennungsmotors (1) nach einem der vorhergehenden Ansprüche, **dadurch gekennzeichnet, dass** das eingeführte Fluid Dieselöl enthält.
